# EUROPÄISCHE PATENTSCHRIFT

(11) **EP 1 050 427 B1**
(45) Veröffentlichungstag und Bekanntmachung des Hinweises auf die Patenterteilung: **31.10.2012**
(21) Anmeldenummer: 00109667.6
(22) Anmeldetag: 06.05.2000
(51) Int. Cl.: B60L 15/00, B60M 3/04

(54) **Verfahren und Vorrichtung zum Betreiben eines Magnetfahrzeugs**
Method and device for operating a magnetic vehicle
Méthode et dispositif de fontionnement d'un véhicule magnétique

(30) Priorität: 07.05.1999 DE 19922441
(43) Veröffentlichungstag der Anmeldung: 08.11.2000
(73) Patentinhaber: ThyssenKrupp Transrapid GmbH, 34127 Kassel (DE)
(72) Erfinder: Fischperer, Rolf, 10719 Berlin (DE)
(74) Vertreter: Lorenz, Bernd Ingo Thaddeus

(56) Entgegenhaltungen:
- JP-A- 11 355 913
- US-A- 4 454 457
- US-A- 5 569 987

## Beschreibung

Die Erfindung betrifft eine Magnetschwebebahn gemäß der im Oberbegriff des Anspruchs 1 angegebenen Gattung.

Bei Linearmotoren für Magnetfahrzeuge, insbesondere bei synchronen Langstator-Linearmotoren für Magnetschwebefahrzeuge, wird die Statorwicklung gewöhnlich in viele kurze, z.B. nur ca. 1,2 km lange und in Fahrtrichtung unmittelbar hintereinander liegende Wicklungsabschnitte unterteilt, die jeweils durch Wechselstellen elektrisch voneinander getrennt sind. Parallel zum Fahrweg ist außerdem ein vergleichsweise langes, z.B. ca. 40 km langes Streckenkabel verlegt, das an ein sogenanntes Unterwerk angeschlossen ist, in dem die zur Stromversorgung der Statorwicklung erforderlichen Umrichter od. dgl. installiert sind. Zur Begrenzung des Energieverbrauchs wird dabei immer nur derjenige Wicklungsabschnitt, in dem sich das Fahrzeug gerade befindet, mit Strom versorgt, indem die einzelnen Wicklungsabschnitte mit Hilfe von Schalteinrichtungen entsprechend der Fortbewegung des Fahrzeugs einzeln und nacheinander mit dem Streckenkabel verbunden werden.

Ein Problem dieser als Kurzschlußverfahren bekannten Steuerung der für die Geschwindigkeit des Fahrzeugs maßgeblichen Stromzufuhr besteht darin, daß beim Überfahren einer Wechselstelle immer nur einer der beiden an diese angrenzenden Wicklungsabschnitte an das Streckenkabel angeschlossen werden darf, da anderfalls der Stromfluß in die Wick-lungsabschnitte nicht mehr kontrolliert werden kann und das Fahrzeug den Strom in einer Weise einprägt, die einem Wicklungskurzschluß entspricht. Als Folge davon ist mit jedem Abschnittswechsel zeitweilig eine Änderung der aktiven Fahrzeuglänge und damit eine Reduzierung der Schubkraft verbunden, die mindestens 50 % beträgt und den Fahrkomfort beeinträchtigt.

Zur Vermeidung derartiger Schubkrafteinbrüche sind bereits zahlreiche Verfahren und Vorrichtungen vorgeschlagen worden (z.B. Sonderdruck aus etz Bd. 108, 1987, Heft 9, Seiten 1 - 24, DE 39 17 058 A1), die unter Schlagworten wie "Bocksprungverfahren", "Wechselschrittverfahren", "Doppelspeisung", "ortsabhängige Stromaufteilung" od. dgl. bekannt sind. Allen diesen Verfahren und Vorrichtungen ist jedoch gemeinsam, daß beim Passieren einer Wechselstelle entweder nur dem einen oder nur dem anderen beteiligten Wicklungsabschnitt Strom zugeführt wird und daher immer nur ein Teil des Fahrzeugmotors aktiv ist. Das gilt auch für ein bekanntes Wechselschrittverfahren (US 5 569 987 A), bei dem zur Erhöbung des während des Anfahrens des Magnetfahrzeugs zur Verfügung stehenden Stroms gewisse Parallel- und Reihenschaltungen von Wicklungs- und Streckenkabelabschnitten vorgenommen werden- Aufgrund dieser Abhängigkeit des aktiven Teils des Fahrzeugmotors von der Fahrzeugposition im Bereich der Wechselstellen können Schubkrafteinbrüche bisher nur dadurch vermieden werden, daß entweder die in den Unterwerken installierten Leistungen überdimensioniert werden, um den erhöhten Bedarf beim Passieren einer Wechselstelle zu decken, oder getrennte, wenigstens zwei Streckenkabel aufweisende Einspeisungssysteme vorgesehen werden (z. B. US 4 454 457 A).

Demgegenüber liegt der Erfindung die Aufgabe zugrunde, das Verfahren und die Vorrichtung der eingangs bezeichneten Gattungen dahingehend abzuändern, daß im Bereich der Wechselstellen stets der gesamte Fahrzeugmotor aktiv bleibt und neue Möglichkeiten geschaffen werden, um Statorabschnittswechsel zu realisieren, die von Schubkrafteinbrüchen weitgehend frei sind.

Zur Lösung dieser Aufgabe dienen die kennzeichnenden Merkmale des Anspruchs 1.

Die Erfindung bringt den Vorteil mit sich, daß die beiden an einer Wechselstelle beteiligten Wicklungsabschnitte während der Abschnittswechsel stets in Reihenschaltung verbunden und von demselben Strom durchflossen sind. Daher ist einerseits die Position des Fahrzeugs relativ zu den Wechselstellen praktisch ohne Bedeutung, andererseits ergeben sich zahlreiche neue Möglichkeiten der Stromzufuhr beim Passieren einer Wechselstelle.

Die Erfindung wird nachfolgend in Verbindung mit den beiliegenden Zeichnungen am Ausführungsbeispiel einer Magnetschwebebahn mit einem Langstator-Linearmotor näher erläutert. Es zeigen:
Fig. 1 einen schematischen Querschnitt durch ein Magnetschwebefahrzeug und dessen Fahrweg;
Fig. 2 schematisch eine erfindungsgemäße Vorrichtung zum Betreiben eines Magnetschwebefahrzeugs; und
Fig. 3 bis 8 grob schematisch die Durchführung des erfindungsgemäßen Verfahrens anhand mehrerer Ausführungsbeispiele der erfindungsgemäßen Vorrichtung.

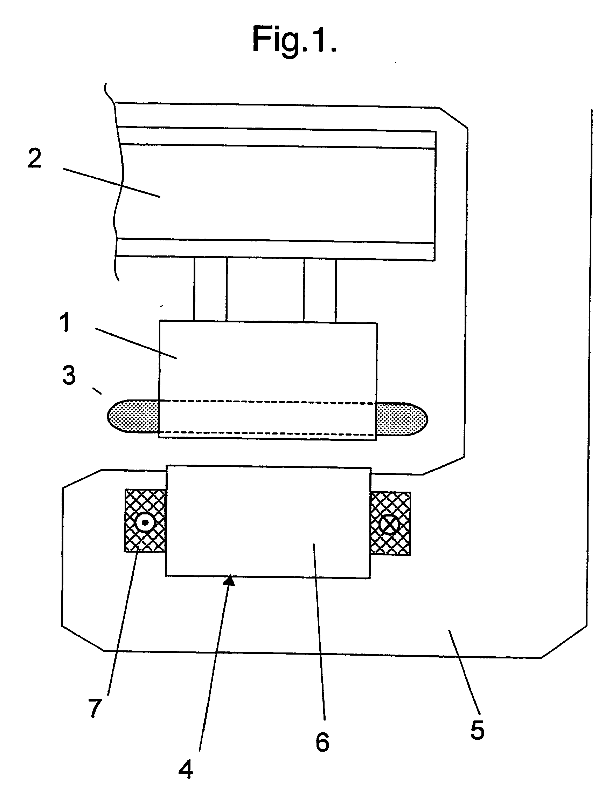

Bei einer Magnetschwebebahn mit synchronem Langstator (Fig. 1) ist ein Statorblechpaket 1 ortsfest mit einem längs einer vorgegebenen Trasse errichteten Fahrweg 2 verbunden. In die Nuten des Statorblechpakets 1 ist eine Langstatorwicklung 3 in Form einer Drehstromwicklung eingelegt, die von einem Umrichter mit Drehstrom variabler Amplitude und Frequenz gespeist wird, wodurch sich in bekannter Weise eine fortschreitende Strombelagswelle längs des Langstatormotors ausbildet. Das Erregerfeld der Langstator-Synchronmaschine wird durch Tragmagnete 4 erzeugt, die mit einem längs des Fahrwegs bewegten, in Fig. 1 nur schematisch angedeuteten Fahrzeug 5 verbunden sind und aus je einem Magnetkern 6 und einer Erregerwicklung 7 bestehen. Neben der Funktion des magnetischen Tragens stellen die Tragmagnete 4 gleichzeitig das Erregerfeld der Synchronmaschine bereit. In der Regel ist auf beiden Seiten des Fahrwegs 2 je ein Statorblechpaket 1 mit der zugehörigen, normalerweise dreiphasigen Langstatorwicklung 3 und und jeweils eine Mehrzahl von Tragmagneten 4 vorgesehen.

Zur Ausbildung der gewünschten Vortriebskraft ist es erforderlich, daß die Fahrzeuggeschwindigkeit synchron zur Ausbreitungsgeschwindigkeit der Strombelagswelle ist. Die maximale Vortriebs- bzw. Schubkraft ergibt sich bei vorgegebener Amplitude der Grundschwingungs-Wandlerwelle, wenn eine optimale relative Lage des Fahrzeug-Erregerfeldes zur Wandlerwelle eingehalten wird, was bei einem Synchron-Drehstrommotor der Einhaltung des optimalen Polradwinkels entsprechen würde. Dies wird durch Frequenzregelung des Wechselrichters erreicht, wobei die momentane Fahrzeuggeschwindigkeit und die relative Lage der Tragmagnete 4 z.B. zur Phase R der Langstatorwicklung 3 als Bezugsgrößen verwendet werden.

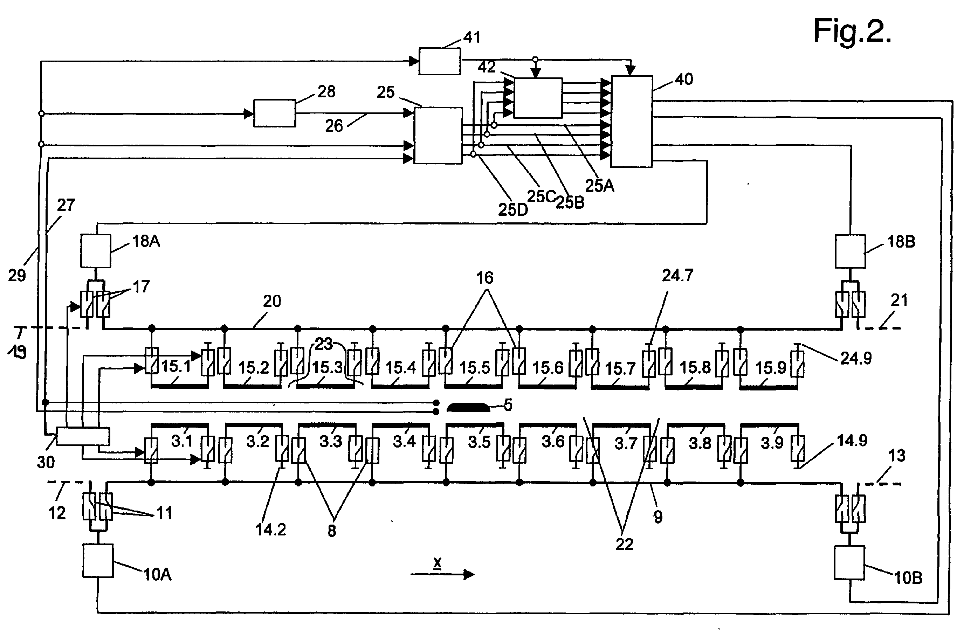

Zur Minimierung des Bedarfs an Blindleistung und Spannung des Langstatormotors wird jeweils nur dasjenige Teilstück der Langstatorwicklung 3 aktiviert (Fig. 2), das gerade von dem z.B. in Richtung des Fahrwegs (Pfeil x) bewegten Fahrzeug 5 befahren wird. Hierzu ist die Langstatorwicklung 3, wie Fig. 2 nur schematisch zeigt, in eine Vielzahl von in Längsrichtung des Fahrwegs unmittelbar aufeinanderfolgenden Wicklungsabschnitten 3.1 bis 3.9 unterteilt, die über je eine zugeordnete Schalteinrichtung 8 an ein Streckenkabel 9 angeschlossen werden können. In Fig. 2 trifft dies gerade für den Wicklungsabschnitt 3.4 zu. Die Enden des Streckenkabels 9 sind an je ein Unterwerk 10A bzw. 10B angeschlossen (Doppelspeisung), in denen die zur Einspeisung des Stroms in die Wicklungsabschnitte 3.1 bis 3.9 erforderlichen Einrichtungen, insbesondere Umrichter od. dgl. installiert sind. Die Unterwerke 10A,B können mittels weiterer Schalteinrichtungen 11 an je ein weiteres längs des Fahrwegs verlegtes Streckenkabel 12 bzw. 13 angeschlossen werden, wenn das Fahrzeug 5 noch nicht in den von den Unterwerken 10A,B bzw. dem Streckenkabel 9 definierten Abschnitt des Fahrwegs eingefahren ist bzw. diesen verläßt.

Tatsächlich besteht die Langstatorwicklung 3 außerdem nicht nur aus den Wicklungsabschnitten 3.1 bis 3.9, sondern auch aus weiteren, entsprechenden Wicklungsabschnitten, die z.B. mit den Wicklungsabschnitten 3.1 bis 3.9 in Sternpunkte 14.1, 14.2 usw. aufweisenden Sternschaltungen verbunden sind, um das übliche Drehstromsystem mit den Phasen R, S und T zu erhalten. Da diese zusätzlichen Wicklungsabschnitte zum Verständnis der Erfindung nicht erforderlich sind, wurden sie in Fig. 2 zur Vereinfachung der Darstellung nicht eingezeichnet.

Die in Fig. 2 dargestellten Wicklungsabschnitte 3.1 bis 3.9 dienen in der Regel nur zum Antrieb einer, z.B. der rechten Seite des Fahrzeugs 5. Entsprechende Wicklungsabschnitte 15.1, 15.2, Schalteinrichtungen 16 und 17, Unterwerke 18A,B und Streckenkabel 19, 20 und 21 dienen zum Antrieb der linken Fahrzeugseite in entsprechender Weise. Dabei sind die Wicklungsabschnitte 3.1 bis 3.9 zu den Wicklungsabschnitten 15.1 bis 15.9 vorzugsweise jeweils um wenigstens eine Fahrzeuglänge in x-Richtung versetzt, um die Anwendung des sog. Wechselschritt-Verfahrens zu ermöglichen. Dieses besteht darin, daß die Schalteinrichtungen 8 bzw. 16 immer dann betätigt werden, wenn sich eine Wechselstelle 22 bzw. 23 zwischen zwei hintereinander angeordneten Wicklungsabschnitten etwa in der Fahrzeugmitte befindet. In der Praxis sind außerdem die sich entsprechenden Unterwerke 10A,18A bzw. 10B,18B jeweils zu einer einzigen, am Fahrweg angeordneten Baugruppe zusammengefaßt. Die Wicklungsabschnitte 15.1 bis 15.9 führen zu Sternpunkten 24.1 bis 24.9.

Zur Steuerung der beschriebenen Magnetschwebebahn dient ein Geschwindigkeits- bzw. Stromregler 25, dem über eine Leitung 26 ein Sollwert für die jeweils zu erzielende bzw. einzuhaltende Geschwindigkeit des Fahrzeugs 5 und über eine Leitung 27 das vom Fahrzeug 5 z.B. per Funk übermittelte aktuelle Ortssignal zugeführt werden. Die Sollwerte für die Geschwindigkeit sind in einem Sollwert-Speicher 28 abgelegt, dem ebenfalls das Ortssignal zugeführt wird und der einen für den jeweils befahrenen Wicklungsabschnitt vorgegebenen Geschwindigkeits- oder Strom-Sollwert abgibt.

Der Stromregler 25, dem über die Leitung 27 ebenfalls die Ortssignale zugeführt werden, liefert an Ausgängen 25A,25B Sollwerte, die z.B. aus Spannungs-Sollwerten bestehen und den Unterwerken 10A, 10B zugeführt werden, um in diesen die an die Streckenkabel anzulegenden Spannungen zu erzeugen bzw. die zur Erzielung der Nenngeschwindigkeit erforderlichen Ströme einzuspeisen. Weitere Ausgänge 25C, 25D liefern entsprechende Signale für die Unterwerke 18A,B. Mittels des am Fahrzeug 5 ermittelten Geschwindigkeit-Istsignals, das in einer Leitung 29 erscheint, überprüft der Geschwindigkeitsregler 25 die Einhaltung der vorgeschriebenen Nenngeschwindigkeit. An die Stelle einer Spannungsregelung in den Unterwerken könnte auch eine Stromregelung treten. Die in Fig. 2 mit dem Ausgang 25A verbundenen Blöcke werden weiter unten erläutert.

Schließlich ist in Fig. 2 eine mit der Leitung 27 verbundene Steuervorrichtung 30 angedeutet, mittels derer die verschiedenen Schalteinrichtungen 8, 11, 16 und 17 in Abhängigkeit von der Ist-Position des Fahrzeugs 5 in x-Richtung so gesteuert werden, daß einerseits stets nur die gerade befahrenen Wicklungsabschnitte und die zugehörigen Unterwerke an die verschiedenen Streckenkabel angeschlossen sind und andererseits die verschiedenen Wicklungsabschnitte in einer für die Erfindung charakteristischen Weise miteinander verbunden werden, wie nachfolgend näher erläutert wird.

Vorrichtungen der beschriebenen Art und ihre Funktion sind allgemein aus den Druckschriften DE-OS 29 32 764 A1, DE 33 03 961 A1, DE 39 17 058 A1 sowie dem Sonderdruck aus etz, Bd. 108, 1987, Heft 9, Seiten 1 - 24 bekannt.

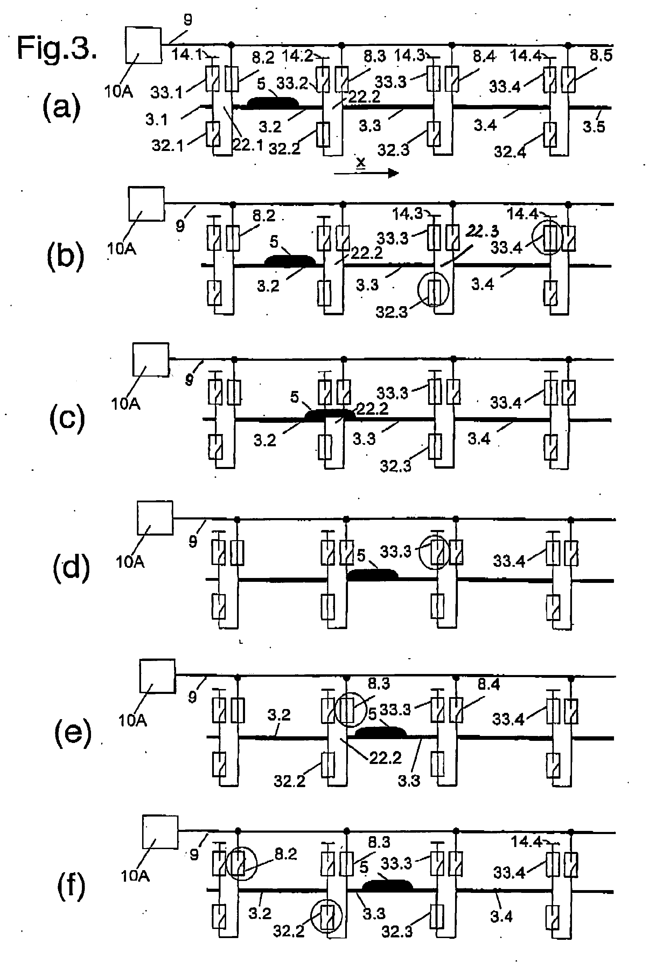

Fig. 3 zeigt schematisch die für bisher am besten gehaltene Ausführungsform der Erfindung, wobei jedoch zur Vereinfachung des Verständnisses nur das Fahrzeug 5, die mit dicken Linien eingezeichneten Wicklungsabschnitte 3.1 bis 3.5, in Fahrtrichtung x jeweils mit dem Anfang eines zugeordneten Wicklungsabschnitts verbundene, als Einspeiseschalter wirksame, erste Schalteinrichtungen 8.2 bis 8.5 und das Streckenkabel 9 dargestellt sind, das hier zur Einfachspeisung nur mit dem Unterwerk 10A verbunden ist. Die einzelnen Wicklungsabschnitte 3.1 bis 3.5 sind dabei durch je eine schematisch angedeutete Wechselstelle 22.1 bis 22.4 elektrisch voneinander getrennt. In einem Ausgangszustand nach Fig. 3a befindet sich nur die Schalteinrichtung 8.2 im geschlossenen Zustand. Die Steuervorrichtung 30 (Fig. 2) ist in Fig. 3 nicht noch einmal dargestellt.

Erfindungsgemäß sind in Fig. 3 zweite Schalteinrichtungen 32.1 bis 32.4 vorgesehen, die auch als Verlängerungsschalter bezeichnet werden könnten, da durch sie je zwei in Fahrtrichtung x unmittelbar hintereinander angeordnete Wicklungsabschnitte elektrisch miteinander verbunden werden können, wie dies in Fig. 3a z.B. für die Wicklungsabschnitte 3.2 und 3.3 gilt. Die übrigen Wicklungsabschnitte sind nicht zu einer elektrischen Reihenschaltung verbunden, da sich nur die Schalteinrichtung 32.2 im geschlossenen Zustand befindet.

In Fig. 3 sind weiterhin dritte Schalteinrichtungen 33.1 bis 33.4 vorgesehen, die auch als Sternpunktschalter bezeichnet werden könnten, da durch sie die Enden der Wicklungsabschnitte 3.1 bis 3.4 mit den zugehörigen Sternpunkten 14.1 bis 14.4 verbunden werden können. Dies gilt in Fig. 3a für den Wicklungsabschnitt 3.3, während alle anderen Sternpunkte 14 offen sind.

Bei Anwendung der Vorrichtung nach Fig. 3 wird erfindungsgemäß vorzugsweise folgendes Verfahren angewendet:
Ausgehend von einem Ausgangszustand nach Fig. 3a, bei dem die Schalteinrichtungen 8.2, 32.2 und 33.3 im geschlossenen Zustand sind, besteht ein Strompfad vom Streckenkabel 9 zum Wicklungsabschnitt 3.2, von dort über die Schalteinrichtung 32.2 und unter Überbrückung der Wechselstelle 22.2 zum nächsten Wicklungsabschnitt 3.3 und von dort schließlich zum Sternpunkt 14.3. Die Wicklungsabschnitte 3.2 und 3.3 sind somit elektrisch in Reihe geschaltet. Das Fahrzeug 5 befindet sich gerade im Wicklungsabschnitt 3.2.

Wenn sich das Fahrzeug 5 der Wechselstelle 22.2 annähert (Fig. 3b), werden zusätzlich die zweiten und dritten Schalteinrichtungen 32.3 und 33.4 in den geschlossenen Zustand gebracht, wie in Fig. 3b durch Kreise angedeutet ist. Dadurch werden unter Überbrückung der Wechselstelle 22.3 auch die hintereinander liegenden Wicklungsabschnitte 3.3 und 3.4 elektrisch in Reihe geschaltet, obwohl diese Reihenschaltung aufgrund der noch geschlossenen dritten Schalteinrichtung 33.3 vorerst weitgehend unwirksam bleibt, da der Wicklungsabschnitt 3.4 gegenüber der zum Sternpunkt 14.3 führenden Leitung eine erheblich größere Impedanz hat.

Im weiteren Verlauf passiert das Fahrzeug 5 die Wechselstelle 22.2 (Fig. 3c), wobei dennoch der gesamte Fahrzeugmotor permanent aktiv bleibt, weil die beiden betroffenen Wicklungsabschnitte 3.2 und 3.3 von Strom durchflossen sind.

Nachdem das Fahrzeug 5 die Wechselstelle 22.2 vollständig überfahren hat (Fig. 3d), wird die dritte, von einem Kreis umrandete Schalteinrichtung 33.3 in den geöffneten Zustand überführt, wodurch die von den drei Wicklungsabschnitten 3.2, 3.3 und 3.4 gebildete Reihenschaltung voll wirksam wird.

Im nächsten Schritt (Fig. 3e) wird die erste Schalteinrichtung 8.3 in den geschlossenen Zustand versetzt, um dadurch den Anfang des Wicklungsabschnitts 3.3 direkt an das Streckenkabel 9 anzuschließen, wodurch zeitweilig ein Teil des Stroms auch noch über den Wicklungsabschnitt 3.2 fließt. Der Stromanteil, der durch das Streckenkabel 9 zum Wicklungsabschnitt 3.3 fließt, ist dabei wegen der vergleichsweise kleinen Impedanz des Streckenkabels 9 erheblich größer als der durch den Wicklungsabschnitt 3.2 fließende Teil des Stroms. Das Fahrzeug 5 befindet sich immer noch im Wicklungsabschnitt 3.3.

Schließlich werden im letzten Verfahrensschritt (Fig. 3f) die erste Schalteinrichtung 8.2 und die zweite Schalteinrichtung 32.2 in den geöffneten Zustand überführt. Dadurch wird die Reihenschaltung der Wicklungsabschnitte 3.2 und 3.3 unterbrochen. Das Fahrzeug 5 befindet sich noch im Wicklungsabschnitt 3.3. Daher ist in dem Endzustand nach Fig. 3f bezüglich der Wicklungsabschnitte 3.3 und 3.4 derselbe Zustand hergestellt, der in Fig. 3a für die Wicklungsabschnitte 3.2 und 3.3 gezeigt ist.

Im weiteren Verlauf der Fahrt des Fahrzeugs 5 wiederholen sich die beschriebenen Verfahrensschritte entsprechend. Dadurch sind je nach Einstellung der Schalteinrichtungen 8, 32 und 33 entweder zwei oder drei in Fahrtrichtung hintereinander liegende Wicklungsabschnitte in Reihe geschaltet mit der Folge, daß sich entsprechende Änderungen der Summe der auf die beteiligten Wicklungs- bzw. Streckenkabelabschnitte entfallenden Impedanzen ergeben. Haben alle Wicklungsabschnitte gleiche Impedanzen und sind die Impedanzanteile der Streckenkabel klein, dann beträgt der Impedanzwechsel jeweils ca. 33 %, was mit einem entsprechenden Stromabfall bzw. einer entsprechenden Stromerhöhung verbunden ist.

Die in Fig. 3 z.B. für die Phase R beschriebenen Schalteinrichtungen sind entsprechend bei den beiden anderen Phasen vorhanden.

Da die Strom- bzw. Schubkraftänderungen, die durch eine Impedanzänderung von 33 % verursacht werden, nicht ebenfalls 33 % betragen, sondern kleiner sind, sind die Schubkraftänderungen im Bereich der Wechselstellen insgesamt verhältnismäßig klein, so daß sie durch eine entsprechend geringfügige Überdimensionierung des Unterwerks 10A leicht ausgeglichen werden können. Vorteilhaft ist in jedem Fall, daß im Bereich der Wechselstellen 22 keine Unterbrechung des Stroms auftritt, stets der ganze Fahrzeugmotor aktiv bleibt und nur ein Streckenkabel 9 und ein Unterwerk 10A benötigt werden, um beim Passieren einer Wechselstelle ähnliche Zustandsänderungen zu erreichen, die bisher nur bei Anwendung der bekannten Bocksprung- bzw. Wechselschrittverfahren und daher nur mit Hilfe von zwei Streckenkabeln und zwei Unterwerken erreicht werden konnten. Aufgrund der aus Fig. 3 ersichtlichen, für die Erfindung charakteristischen Schaltfolgen für die Wicklungsabschnitte wird das erfindungsgemäße Verfahren als Teilschrittverfahren bezeichnet.

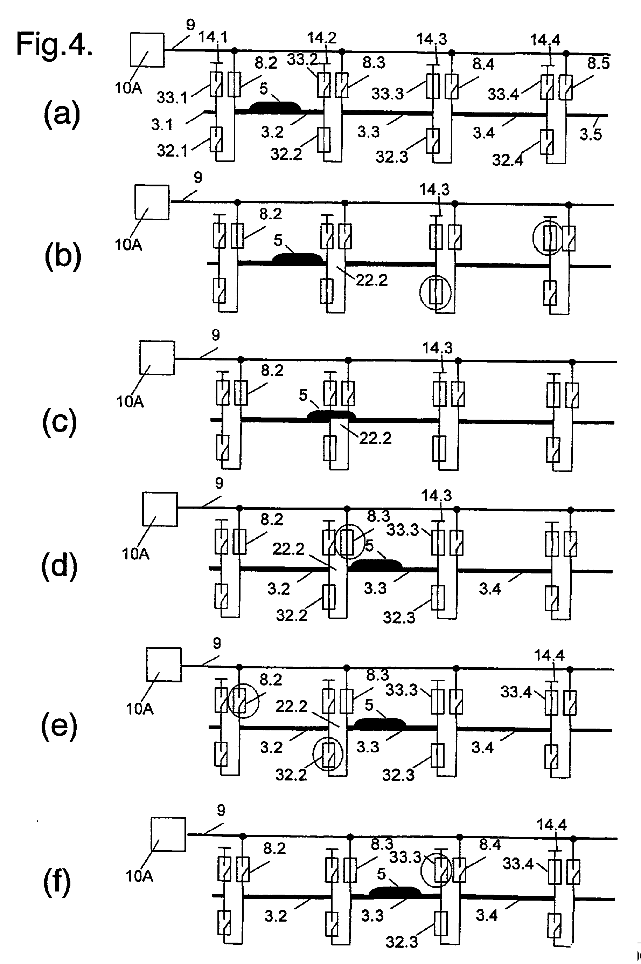

Kann in den Unterwerken 10A eine ausreichend hohe Leistung (insbesondere Spannung) installiert werden, was z.B. im mit geringen Fahrtgeschwindigkeiten auskommenden Regionalverkehr aufgrund des insgesamt geringen Leistungsbedarfs unproblematisch ist, kann entsprechend Fig. 4, in der gleiche Teile mit denselben Bezugszeichen wie in Fig. 3 versehen sind, auch vorgesehen sein, höchstens zwei in Fahrtrichtung x hintereinander angeordnete Wicklungsabschnitte in Reihe zu schalten.

Die Fig. Z4a bis 4c entsprechen den Fig. 3a bis 3c, wobei wegen des geschlossenen Sternpunkts 14.3 der Wicklungsabschnitt 3.4 wie in Fig. 3 praktisch ohne Auswirkung auf die Gesamtimpedanz der aus den Wicklungsabschnitten 3.2 und 3.3 gebildeten Reihenschaltung ist.

Hat das Fahrzeug 5 die Wechselstelle 22.2 entsprechend Fig. 4d passiert, wird bei dieser Ausführungsform anders als in Fig. 3d die Schalteinrichtung 8.3 in den geschlossenen Zustand gebracht, wodurch der noch zugeschaltete Wicklungsabschnitt 3.2 praktisch überbrückt wird. Der Strom fließt hier wegen der geringen Impedanz des zugeschalteten Streckenkabelabschnitts praktisch allein durch den Wicklungsabschnitt 3.3. Im weiteren Verlauf der Fahrt des Fahrzeugs 5 werden dann zunächst die Schalteinrichtungen 8.2 und 32.2 in den geöffneten Zustand versetzt (Fig. 4e), wodurch der Wicklungsabschnitt 3.2 von der Reihenschaltung abgetrennt wird. Abschließend wird gemäß Fig. 4f die Schalteinrichtung 33.3 in den geöffneten Zustand geschaltet, wodurch der Sternpunkt 14.3 geöffnet wird und sich für die Wicklungsabschnitte 3.3 und 3.4 der in Fig. 4a für die Wicklungsabschnitte 3.2 und 3.3 gezeigte Zustand ergibt. Die Betätigungen der Schalteinrichtungen haben beim Beispiel nach Fig. 4 somit Impedanzwechsel von ca. 50 % zur Folge, so daß in den Unterwerken 10A entsprechend höhere Leistungen für den aus Fig. 4d ersichtlichen Zustand installiert werden müssen.

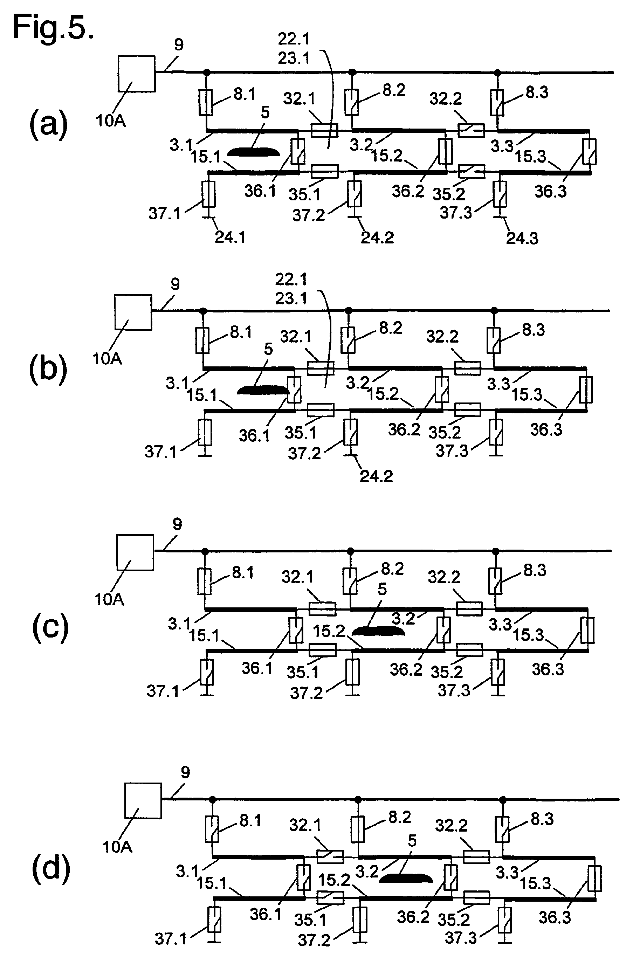

Fig. 5 zeigt ein Ausführungsbeispiel, bei dem mittels je eines Streckenkabels 9 und eines Unterwerks 10A und im übrigen analog zu Fig. 2 mehrere Wicklungsabschnitte 3.1 bis 3.3 bzw. 15.1 bis 15.3 von zwei nebeneinander angeordneten Langstatorwicklungen mit Strom versorgt werden.

Beim Ausführungsbeispiel nach Fig. 5 sind zusätzlich zu den Schalteinrichtungen 8.1 bis 8.3 und 32.1,32.2 zweite, den Schalteinrichtungen 32 entsprechende, zur Verbindung der Wicklungsabschnitte 15.1 bis 15.3 usw. bestimmte Schalteinrichtungen 35.1 und 35.2 sowie vierte Schalteinrichtungen 36.1,36.2 vorgesehen, mittels derer jeweils zwei nebeneinander liegende und einander paarweise zugeordnete Wicklungsabschnitte 3.1,15.1 bzw. 3.2,15.2 usw. miteinander verbunden werden können, wobei diese Verbindungen an den in Fahrtrichtung x vorderen Enden der Wicklungsabschnitte erfolgt. Die Schalteinrichtungen 36 könnten daher z.B. als Reihenschalter interpretiert werden. Die Schalteinrichtungen 16 und 33 sowie die zugehörigen Sternpunkte 14 (Fig. 3,4) fehlen. Statt dessen sind dritte Schalteinrichtungen 37.1, 37.2 usw. vorgesehen, die zwischen die Wicklungsabschnitte 15.1 usw. und die zugehörigen Sternpunkte 24.1 usw. geschaltet sind, die an die in Fahrtrichtung x hinteren Enden der Wicklungsabschnitte 15.1 usw. angeschlossen sind.

Wie Fig. 5a zeigt, befindet sich das Fahrzeug 5 mit seiner linken bzw. rechten Motorhälfte in den nebeneinander liegenden Wicklungsabschnitten 3.1 und 15.1. Die Schalteinrichtungen 8.1, 32.1, 36.2, 35.1 und 37.1 sind im geschlossenen, die übrigen Schalteinrichtungen im offenen Zustand. Daher durchfließt der vom Unterwerk 10A kommende Strom nacheinander die erste Schalteinrichtung 8.1, den daran anschließenden Wicklungsabschnitt 3.1 und dann unter Überbrückung der Wechselstelle 22.1 die Schalteinrichtung 32.1 und den Wicklungsabschnitt 3.2, die Schalteinrichtung 36.2 und den Wicklungsabschnitt 15.2. Danach wird mittels der Schalteinrichtung 35.1 die Wechselstelle 23.1 überbrückt, und schließlich fließt der Strom durch den Wicklungsabschnitt 15.1 und die Schalteinrichtung 37.1 zum Sternpunkt 24.1. Analog zu Fig. 3 und 4 sind somit je zwei hintereinander angeordnete Wicklungsabschnitte, nämlich 3.1,3.2 einerseits und 15.2,15.1 andererseits, elektrisch in Reihe hintereinander geschaltet, wobei außerdem die beiden nebeneinander liegenden Reihenschaltungen 3.1,3.2 und 15.2,15.1 durch die Schalteinrichtung 36.2 elektrisch in Reihe geschaltet sind.

Wenn sich das Fahrzeug 5 im weiteren Verlauf den Wechselstellen 22.1,23.1 nähert, wird die Schalteinrichtung 36.2 geöffnet, während die Schalteinrichtungen 32.2, 35.2 und 36.3 in den geschlossenen Zustand gebracht werden, so daß jetzt analog zu Fig. 3 je drei hintereinander angeordnete Wicklungsabschnitte 3.1 bis 3.3 bzw. 15.3 bis 15.1 elektrisch in Reihe geschaltet und durch die Schalteinrichtung 36.3 zusätzlich die beiden nebeneinander liegenden Reihenschaltungen in Serie geschaltet sind. Hat das Fahrzeug 5 die Wechselstellen 22.1,23.1 passiert (Fig. 5c), wird einerseits die Schalteinrichtung 37.1 geöffnet und die Schalteinrichtung 37.2 geschlossen, um den Sternpunkt 24.1 zu öffnen und den Sternpunkt 24.2 zu schließen. Andererseits wird die Schalteinrichtung 8.2 geschlossen, und die zweiten Schalteinrichtungen 8.1, 32.1 und 35.1 werden geöffnet (Fig. 5d), um dadurch die Wicklungsabschnitte 3.1,15.1 von den Reihenschaltungen zu trennen. Der erreichte Endzustand entspricht für die Wicklungsabschnitte 3.2,3.3 bzw. 15.2,15.3 dem aus Fig. 5a für die Wicklungsabschnitte 3.1,3.2 bzw. 15.1,15.2 ersichtlichen Ausgangszustand. Daraus ergibt sich, daß wie in Fig. 3 jeweils zwei oder drei Wicklungsabschnitte pro Motorseite zu einer Reihenschaltung verbunden sind. Werden dabei, was in Fig. 5 nicht gesondert dargestellt ist, die Wechselstellen um wenigstens eine Fahrzeuglänge in x-Richtung versetzt (Wechselschrittverfahren), beträgt der durch die Impedanzwechsel bewirkte Schubkrafteinbruch maximal 16,7 %. Auch bei diesem Beispiel sind entsprechende Schalteinrichtungen für die anderen beiden Phasen vorgesehen.

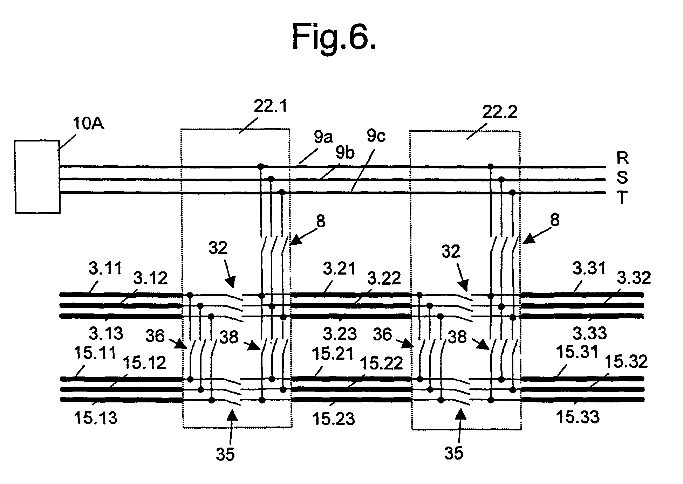

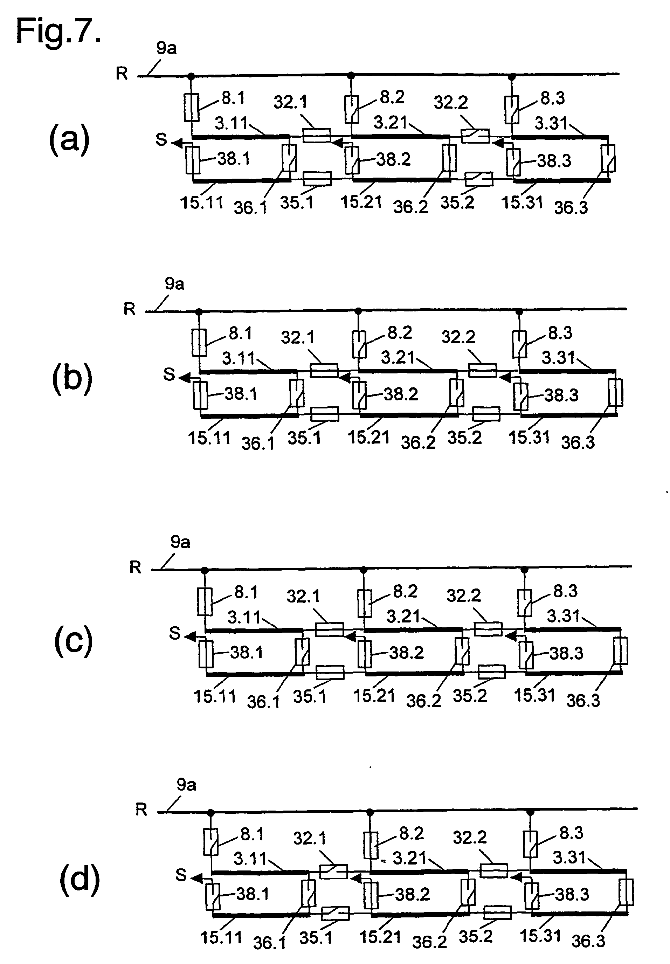

Ein weiteres Ausführungsbeispiel der Erfindung ergibt sich aus Fig. 6 und 7, nach denen die Wicklungsabschnitte nicht in einer Sternschaltung, sondern in einer Drehstrom-Dreieckschaltung angeordnet sind. Infolgedessen sind, wie nur in Fig. 6 für alle drei Phasen dargestellt ist, drei Streckenkabel 9a, 9b und 9c für die Phasen R, S und T und entsprechend pro Motorseite je drei linke bzw. rechte Wicklungsabschnitte 3.11 (R), 3.12 (S), 3.13 (T) usw. bzw. 15.11 (R), 15.12 (S) und 15.13 (T) usw. vorgesehen. Außerdem sind in Fig. 6 schematisch zwei Wechselstellen 22.1 und 22.2 angedeutet, denen analog zu Fig. 3 jeweils eine erste Schalteinrichtung 8, je eine zweite Schalteinrichtung 32,35 für den linken bzw. rechten Wicklungsabschnitt, eine vierte Schalteinrichtung 36 zur verbindung von zwei nebeneinander liegenden Wicklungsabschnitten und je eine fünfte Schalteinrichtung 38 zugeordnet sind, die als Dreieck-Schalter bezeichnet werden könnten. Alle Schalteinrichtungen sind hier vorzugsweise als dreipolige, gleichzeitig betätigbare Schalter ausgebildet. Soll bei dieser Variante z.B. Strom in die Wicklungsabschnitte 3.21 bis 3.23 und 15.21 bis 15.23 eingespeist werden, ist es erforderlich, in der Wechselstelle 22.1 die Schalteinrichtungen 8 und 38 und in der Wechselstelle 22.2 die Schalteinrichtung 36 in den geschlossenen Zustand, alle anderen Schalteinrichtungen dagegen in den geöffneten Zustand zu versetzen. Dadurch würde das Streckenkabel 9a über die geschlossene Schalteinrichtung 8, den Wicklungsabschnitt 3.21, die geschlossene Schalteinrichtung 36, den Wicklungsabschnitt 15.21 und die geschlossene Schalteinrichtung 38 mit dem Anfang des Wicklungsabschnitts 3.22 (Verbindung der Phasen R und S) verbunden. Entsprechend würden das Streckenkabel 9b an den Anfang des Wicklungsabschnitts 3.23 (Verbindung der Phasen S und T) und das Streckenkabel 9c an den Anfang des Wicklungsabschnitts 3.21 (Verbindung der Phasen T und R) angeschlossen, wie dies für Dreieckschaltungen charakteristisch ist.

Fig. 7a bis 7d zeigen die erfindungsgemäßen Fortschaltungen der Wicklungsabschnitte bei Anwendung der Dreipunktschaltung nach Fig. 6, wobei nur eine Phase mit dem Streckenkabel 9a (Phase R) und den Wicklungsabschnitten 3.11 bis 3.31 bzw. 15.11 bis 15.31 dargestellt ist. Analog zu Fig. 3 werden die Schalteinrichtungen 8, 32, 35, 36 und 38 so betätigt, daß in einem aus Fig. 7a ersichtlichen Ausgangszustand je zwei hintereinander angeordnete Wicklungsabschnitte 3.11,3.21 bzw. 15.11,15.21 in Reihenschaltung verbunden sind, wobei die Schalteinrichtung 36.2 gleichzeitig die beiden nebeneinander liegenden Reihenschaltungen der linken und rechten Motorhälfte verbindet und die Schalteinrichtung 38.1 analog zu Fig. 6 das Streckenkabel 9a (Phase R) mit der schematisch angedeuteten Phase S verbindet. Bei Annäherung des nicht dargestellten Fahrzeugs an die nächste Wechselstelle zwischen den Wicklungsabschnitten 3.11,3.21 bzw. 15.11,15.21 werden die jeweils dritten Wicklungsabschnitte 3.31 und 15.31 in diese Reihenschaltung einbezogen. Fig. 7c zeigt, daß jetzt die Schalteinrichtung 8.2 eingeschaltet und dadurch das Streckenkabel 9a analog zu Fig. 3e den Wicklungsabschnitten 3.11,15.11 parallel geschaltet wird. Der in Fig. 7d gezeigte Zustand stellt dann wieder zu Fig. 7a analoge Verhältnisse für die Reihenschaltungen der Wicklungsabschnitte 3.21,3.31 bzw. 15.21,15.31 her.

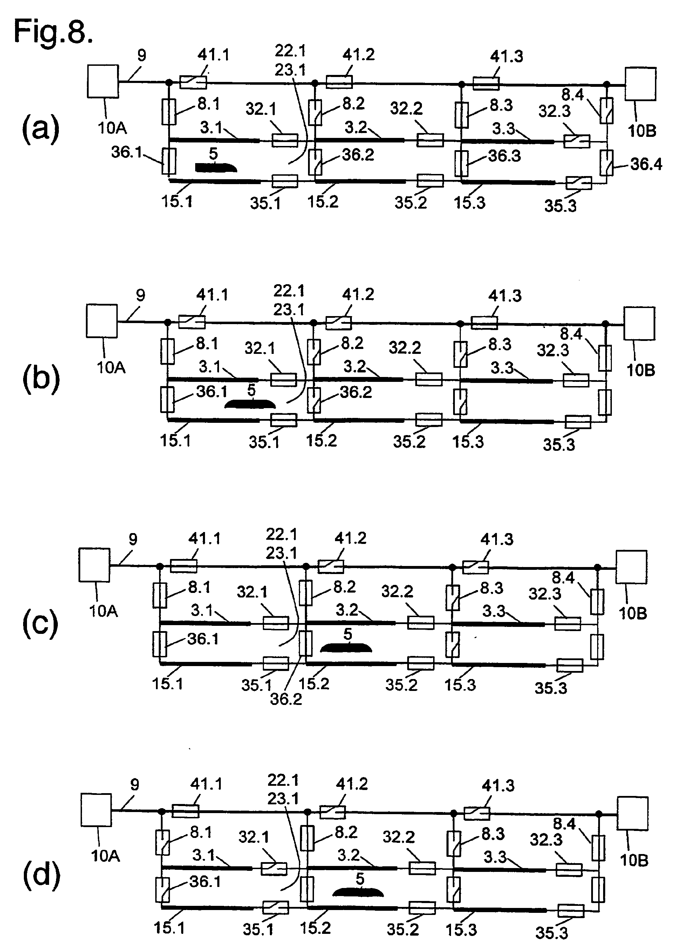

Fig. 8 zeigt schließlich eine sogenannte offene Sternschaltung mit parallel betriebenen Wicklungsabschnitten für eine Phase. In diesem Beispiel ist an beide Enden des Streckenkabels 9 je ein Unterwerk 10A bzw. 10B angeschlossen, und das Streckenkabel 9 selbst ist durch zusätzliche Schalteinrichtungen 41.1 bis 41.3 in einzelne Abschnitte unterteilt. Analog zu Fig. 3 bis 7 ist in einem Ausgangszustand (Fig. 8a) die Schalteinrichtung 41.1 im geöffneten Zustand, während sich alle in Fahrtrichtung x davor liegenden Schalteinrichtungen 41.2,41.3 usw. im geschlossenen Zustand befinden. Der Strom wird außerdem vom Unterwerk 10A parallel in die jeweils in Reihenschaltung verbundenen Wicklungsabschnitte 3.1,3.2 bzw. 15.1,15.2 eingespeist, weil die vierten Schalteinrichtungen 36 hier die in Fahrtrichtung x hinteren Enden der Wicklungsabschnitte 3.1,15.1 bzw. 3.2,15.2 usw. miteinander verbinden. Am Ende dieser Reihenschaltungen wird der Strom über die Schalteinrichtung 8.3 und 41.3 einem im Unterwerk 10B befindlichen Sternpunkt zugeführt. Alternativ könnte der Sternpunkt auch im Unterwerk 10A gebildet sein, in welchem Fall das in Fig. 8 rechte Ende des Streckenkabels 9 zum Unterwerk 10A zurückgeführt werden müßte. Im übrigen ergeben sich die Zustände nach Fig. 8b, 8c und 8d aus den dargestellten Zuständen aus den Einstellungen der Schalteinrichtungen analog zu Fig. 3 bis 7.

Noch ein anderes Ausführungsbeispiel könnte eine offene Sternschaltung in der Weise vorsehen, daß die beiden nebeneinander liegenden Reihenschaltungen aus den linken und rechten Wicklungsabschnitten nicht wie in Fig. 8 parallel, sondern wie in Fig. 5 in Reihenschaltung betrieben werden.

Die aus Fig. 8 ersichtliche Variante kann dadurch ergänzt werden, daß jeder Streckenkabelabschnitt mit je zwei Schalteinrichtungen anstatt mit nur einer Schalteinrichtung 41.1 bis 41.3 versehen wird, wobei diese Schalteinrichtungen vorzugsweise am Anfang und am Ende eines jeden Streckenkabelabschnitts angebracht werden. Für diesen Fall ist es möglich, mit Hilfe der anderen beschriebenen Schalteinrichtungen einen defekten Strekkenkabelabschnitt zu umgehen, so daß nur für den Bereich zwischen den beiden zugehörigen Wechselstellen ein geringfügiger Schubkrafteinbruch in Kauf genommen werden muß. Dieselbe Wirkung kann erzielt werden, wenn zwei Streckenkabel vorgesehen und diese an jeder Wechselstelle durch weitere Schalteinrichtungen miteinander verbunden werden. Eine solche Lösung bringt den zusätzlichen Vorteil mit sich, daß über jedes der beiden Streckenkabel die halbe Leistung zugeführt werden kann, so daß selbst beim Ausfall eines kompletten Kabels kein völliger Ausfall des zugehörigen Motorteils eintritt. Schließlich können mit Hilfe der beschriebenen Schalteinrichtungen auch defekte Wicklungsabschnitte weitgehend unwirksam gemacht werden, indem sie durch geeignete Einstellung der Schalteinrichtungen bei den beschriebenen Fortschaltungen umgangen werden.

Die beschriebenen Ausführungsbeispiele setzen einerseits voraus, daß zur Aufrechterhaltung des Nennstroms beim Überwechseln von einem auf zwei bzw. von zwei auf drei Wicklungsabschnitte eine ausreichende Spannungsreserve vorhanden ist. Andererseits muß beim Wegschalten eines Wicklungsabschnitts verhindert werden, daß aufgrund der Impedanzverkleinerung eine kritische Stromgrenze überschritten wird, z.B. aufgrund von zu träge arbeitenden Stromreglern, da dies Beschädigungen des Antriebsmotors zur Folge haben könnte. Die Erfindung sieht daher gemäß Fig. 2 zusätzlich eine Schaltungsanordnung in Form eines Spannungshalters vor, der während der aus Fig. 3 bis 8 ersichtlichen Umschaltungen aktiviert wird. Dazu führt der Ausgang des üblichen Geschwindigkeits- bzw. Stromreglers 25 über ein Auswählorgan 40 zum Eingang des zugehörigen, mit dem Streckenkabel 9 verbundenen Unterwerks 10A. Außerdem ist eine Ablaufsteuerung 41 vorgesehen, die eingangsseitig z.B. mit der Leitung 27 (Fig. 2) verbunden ist, über die das aktuelle Ortssignal des Fahrzeugs 5 zugeführt wird, und die außerdem an einem Ausgang Steuersignale für das Auswählorgan 40 und einen Speicher 42 liefert, der weitere, mit den Ausgängen 25A bis 25D des Stromreglers 25 verbundene Eingänge und mit dem Auswählorgan 40 verbundene Ausgänge aufweist. Diese Ablaufsteuerung 41 arbeitet wie folgt:

Bei normaler Fahrt des Fahrzeugs 5 innerhalb irgendeines Wicklungsabschnitts verbindet das Auswählorgan 40 die Ausgänge 25A bis 25D des Stromreglers 25 mit dem Unterwerk 10A, 10B 18A bzw. 18B. Kurz vor dem Einlaufen des Fahrzeugs 5 in eine Wechselstelle, d.h. kurz bevor die erste Schalteinrichtung betätigt wird (z.B. die Schalteinrichtung 32.3 in Fig. 3), gibt die Ablaufsteuerung 41 ein Steuersignal ab, wodurch die betreffenden Ausgänge 25A bis 25D Stromreglers 25 mit den zugeordneten weiteren Eingängen des Speichers 42 und gleichzeitig die entsprechenden Eingänge des Auswählorgans 40 mit den zugehörigen Ausgängen des Speichers 42 verbunden werden. Dadurch übernimmt der Speicher 42 den zu diesem Zeitpunkt am betreffenden Ausgang 25A bis 25D des Stromreglers 25 erscheinenden Sollwert und speichert diesen. Gleichzeitig ist der Speicher 42 über das Auswählorgan 40 mit dem betreffenden Unterwerk 10A bis 18B verbunden, so daß diesem der gespeicherte Sollwert zugeführt wird. Dieser Zustand bleibt so lange erhalten, bis das Fahrzeug 5 die betreffende Wechselstelle passiert hat und beispielsweise der Endzustand nach Fig. 3f erreicht ist. Zu diesem Zeitpunkt gibt die Ablaufsteuerung 41 ein Steuersignal ab, das den Speicher 42 vom Auswählorgan 40 trennt und statt dessen den Stromregler 25 wieder direkt mit dem Unterwerk 10A bis 18B verbindet. Dadurch ergibt sich der wesentliche Vorteil, daß im Bereich der Wechselstellen in den Unterwerken eine konstante Spannung erzeugt wird und der Stromregler 25 unwirksam ist. Die oben beschriebenen Impedanzverkleinerungen können daher keine unerwünschten Stromüberhöhungen und damit keine Motorschäden verursachen. Stattdessen erfolgt während einer Impedanzerhöhung ein geringfügiges Absinken des Stroms. Die konstante Spannung kann auch über andere Einrichtungen generiert werden, z.B. durch off-line-Berechnungen.

Die Erfindung ist nicht auf die beschriebenen Ausführungsbeispiele beschränkt, die in vielfacher Weise abgeändert werden könnten. Dies gilt insbesondere für die anhand der Fig. 3 bis 8 beschriebenen Ausführungsbeispiele, die in weiten Grenzen variiert werden können, insbesondere im Hinblick auf die Ausbildung und Folgesteuerung der verschiedenen Schalteinrichtungen. Die Schalteinrichtungen bestehen vorzugsweise aus Vakuumschützen, doch können auch andere Schalteinrichtungen vorgesehen werden. Weiter könnte vorgesehen sein, in Fig. 3 einzelne Verfahrensschritte gleichzeitig durchzuführen, z.B. die Verfahrensschritte nach Fig. 3d bis 3f. Dabei dient allerdings z.B. die Durchführung des Verfahrensschritts nach Fig. 3e dem Zweck, das Schließen der Schalteinrichtung 16.3 sicher vor dem Öffnen der Schalteinrichtung 16.2 und 41.2 zu bewirken, damit nicht unbeabsichtigt eine Stromunterbrechung eintritt. Entsprechende Überlegungen können sich für die übrigen Verfahrensschritte ergeben. Insbesondere sollte der dritte Wicklungsabschnitt 3.4 in Fig. 3c schon zugeschaltet sein, bevor die Einspeisung des ersten Wicklungsabschnitts 3.2 (Fig. 3e) überbrückt und dadurch unter Umständen kurzzeitig ein zu hoher Strom im Wicklungsabschnitt 3.3 erzeugt wird. Weiter versteht sich, daß das Zeitintervall, in dem der durch den Speicher 42 repräsentierte Spannungshalter aktiv ist, möglichst kurz sein sollte, da normalerweise nur für diesen Fall vor und hinter den Wechselstellen im wesentlichen gleiche Nenngeschwindigkeiten zu erwarten sind und daher im wesentlichen gleiche Werte für den Strom benötigt werden. Schließlich versteht sich, daß die einzelnen Merkmale der Erfindung auch in anderen als den beschriebenen und dargestellten Kombinationen verwendet werden können.

## Patentansprüche

1. Magnetschwebebahn umfassend ein Magnetfahrzeug (5), einen Fahrweg (2), einen synchronen Langstator-Linearmotor, der wenigstens eine in Richtung des Fahrwegs (2) verlegte Langstatorwicklung mit einer Mehrzahl von unmittelbar aufeinander folgenden, durch Wechselstellen (22, 23) elektrisch voneinander getrennten Wicklungsabschnitten (3.1- 3.9, 15.1 - 15.9) aufweist, wenigstens einem in Richtung (x) des Fahrwegs (2) erstreckten, zur Stromversorgung der Wicklungsabschnitte bestimmten Streckenkabel (z. B. 9), wenigstens einem mit dem Streckenkabel (9) verbundenen Unterwerk (z. B. 10A, 10B) und ersten Schalteinrichtungen (8, 16) zum nacheinander erfolgenden Anschluß der Wicklungsabschnitte (3.1 - 3.9, 15.1 - 15.9) an das Streckenkabel (9) entsprechend der Fortbewegung des Fahrzeugs (5), **gekennzeichnet durch** zweite Schalteinrichtungen (32, 35), mittels derer während des Überfahrens einer Wechselstelle (22, 23) **durch** das Magnetfahrzeug (5) jeweils ein erster Wicklungsabschnitt (z. B. 3.2) und ein zweiter Wicklungsabschnitt (z. B. 3.3), der **durch** die Wechselstelle (22, 23) vom ersten Wicklungsabschnitt (z. B. 3.2) getrennt und in Fahrtrichtung (x) unmittelbar auf diesen folgend angeordnet ist, elektrisch zu einer Reihenschaltung miteinander verbunden werden.

2. Magnetschwebebahn nach Anspruch 1, **dadurch gekennzeichnet, daß** der Reihenschaltung vor, während oder nach dem Überfahren der Wechselstelle (22.2) ein dritter, in Fahrtrichtung (x) unmittelbar vor ihr liegender Wicklungsabschnitt (z.B. 3.4) in Reihe zugeschaltet wird.

3. Magnetschwebebahn nach Anspruch 2, **dadurch gekennzeichnet, daß** der erste Wicklungsabschnitt (3.2) nach dem Überfahren der Wechselstelle (22.2) elektrisch von der Reihenschaltung getrennt und der zweite Wicklungsabschnitt (3.3) direkt an das Streckenkabel (9) angeschlossen wird.

4. Magnetschwebebahn nach einem der Ansprüche 1 bis 3, **dadurch gekennzeichnet, daß** beim Vorhandensein von zwei nebeneinander angeordneten Langstatorabschnitten jeweils nebeneinander liegende und einander paarweise zugeordnete Wicklungsabschnitte (z.B. 3.1,15.1 bzw. 3.2,15.2) durch Reihen- oder Parallelschaltung in die Reihenschaltung einbezogen werden.

5. Magnetschwebebahn nach einem der Ansprüche 1 bis 4, **dadurch gekennzeichnet, daß** die Wicklungsabschnitte nach Art einer Drehstrom-Stempunkt- oder -Dreieckschaltung zusammengefaßt und betrieben werden.

6. Magnetschwebebahn nach einem der Ansprüche 1 bis 5, **gekennzeichnet durch** dritte Schalteinrichtungen (33, 37), **durch** die Wicklungsabschnitte (z.B. 3.1 - 3.4) einzeln mit je einem Sternpunkt (z.B. 15.1 - 15.4) verbindbar sind.

7. Magnetschwebebahn nach einem der Ansprüche 1 bis 6, **dadurch gekennzeichnet, daß** der Langstator zwei nebeneinander liegende Abschnitte mit jeweils nebeneinander liegenden, durch vierte Schalteinrichtungen (36) miteinander verbindbaren Wicklungsabschnitten (z.B. 3.1,15.1 bzw. 3.2,15.2) aufweist.

8. Magnetschwebebahn nach einem der Ansprüche 1 bis 7, **dadurch gekennzeichnet, daß** die Wicklungsabschnitte (3.1 - 3.9, 15.1 - 15.9) zwischen je zwei Wechselstellen (22,23) in Sternschaltung geschaltet sind und jeder Wechselstelle (22,23) wenigstens je eine erste, zweite und dritte Schalteinrichtung (8,16;32,35;33,37) zugeordnet sind.

9. Magnetschwebebahn nach Anspruch 8, **dadurch gekennzeichnet, daß** zwischen je zwei Wechselstellen (22,23) wenigstens je zwei Wicklungsabschnitte (z.B. 3.2,15.2) angeordnet sind und jeder Wechselstelle (22,23) wenigstens je eine erste Schalteinrichtung (z.B. 8.2), zwei zweite Schalteinrichtungen (z.B. 32.1,35.1), eine dritte Schalteinrichtung (z.B. 37.2) und eine vierte Schalteinrichtung (36.1) zugeordnet sind.

10. Magnetschwebebahn nach einem der Ansprüche 1 bis 7, **dadurch gekennzeichnet, daß** die Wicklungsabschnitte (z.B. 3.11,3.21,3.31) zwischen je zwei Wechselstellen (22.1,22.2) in Dreieck-Schaltung geschaltet und jeder Wechselstelle (22.1,22.2) wenigstens je eine erste und vierte Schalteinrichtung (z.B. 8.2,36.1), zwei zweite Schalteinrichtungen (z.B. 32.1 u. 35.1) und eine fünfte Schalteinrichtung (z.B. 38.2) zur Verbindung von zwei Phasen (z.B. R und S) zugeordnet sind.

11. Magnetschwebebahn nach einem der Ansprüche 1 bis 10, **dadurch gekennzeichnet, daß** sie eine zur Spannungs- oder Stromhaltung bestimmte Schaltungsanordnung mit einem zur Speicherung eines Spannungs- oder Strom-Sollwerts bestimmten Speicher (42) und einer Ablaufsteuerung (41) derart aufweist, daß während Schaltvorgängen anstelle eines durch aktive Regelung vorgegebenen Sollwerts stets eine konstante, gesteuerte Spannung dem zugehörigen Unterwerk (z.B. 10A) zugeführt wird, welche den gewünschten Stromfluß nach erfolgtem Schaltvorgang sicherstellt.

## Claims

1. A magnetic levitation rail system comprising a magnetic vehicle (5), a track system (2), a synchronous, long stator, linear motor, which has at least one long stator winding laid in the direction of the track system (2) with a multiplicity of winding sections (3.1 - 3.9, 15.1 - 15.9) following directly upon one another, electrically separated from one another by means of changeover stations, at least one trackside cable (e.g. 9) extending in the direction (x) of the track system (2), dedicated to the purpose of power supply to the winding sections, at least one substation (e.g. 10A, 10B) connected with the trackside cable (9), and first switching devices (8, 16) for purposes of connecting the winding sections (3.1 - 3.9, 15.1- 15.9) in sequence to the trackside cable (9) in accordance with the progress of the vehicle (5), **characterised by** second switching devices (32, 35), by means of which, as the magnetic vehicle (5) passes over a changeover station (22, 23), the first winding section (e.g. 3.2) and a second winding section (e.g. 3.3), which is separated by means of the changeover station (22, 23) from the first winding section (e.g. 3.2) and is arranged in the direction of travel (x) immediately following the latter, are in each case electrically connected with one another in a series circuit.

2. The magnetic levitation rail system in accordance with Claim 1, **characterised in that** before, during or after the passage over the changeover station (22.2), a third winding section (e.g. 3.4), located directly ahead of the former in the direction of travel (x), is connected in series to the series circuit.

3. The magnetic levitation rail system in accordance with Claim 2, **characterised in that** after the passage over the changeover station (22.2), the first winding section (3.2) is electrically disconnected from the series circuit, and the second winding section (3.3) is directly connected to the trackside cable (9).

4. The magnetic levitation rail system in accordance with one of the Claims 1 to 3, **characterised in that** in the case of the presence of two long stator sections arranged next to one another winding sections (e.g. 3.1, 15.1 or 3.2, 15.2 ) located in each case next to one another and assigned to one another in pairs, are introduced into the series circuit in series or in parallel.

5. The magnetic levitation rail system in accordance with one of the Claims 1 to 4, **characterised in that** the winding sections are aggregated and operated in the form of an alternating current star connection or delta connection.

6. The magnetic levitation rail system in accordance with one of the Claims 1 to 5, **characterised by** third switching devices (33, 37), by means of which the winding sections (e.g. 3.1 - 3.4) can be individually connected in each case with a star point (e.g. 15.1 - 15.4).

7. The magnetic levitation rail system in accordance with one of the Claims 1 to 6, **characterised in that** the long stator has two sections located next to one another with winding sections (e.g. 3.1, 15.1 or 3.2, 15.2) in each case located next to one another, which can be connected with one another by means of fourth switching devices (36).

8. The magnetic levitation rail system in accordance with one of the Claims 1 to 7, **characterised in that** the winding sections (3.1 - 3.9, 15.1 - 15.9) between each pair of changeover stations (22, 23) are connected in a star connection, and each changeover station (22, 23) is assigned at least to a first, second and third changeover device (8, 16; 32, 35; 33, 37).

9. The magnetic levitation rail system in accordance with Claim 8, **characterised in that** at least one pair of winding sections (e.g. 3.2, 15.2) is arranged between each pair of changeover stations (22, 23), and at least one first switching device (e.g. 8.2), two second switching devices (e.g. 32.1, 35.1), one third switching device (e.g. 37.2) and one fourth switching device (36.1) are assigned to each changeover station (22, 23).

10. The magnetic levitation rail system in accordance with one of the Claims 1 to 7, **characterised in that** the winding sections (e.g. 3.11, 3.21, 3.31) between each pair of changeover stations (22.1, 22.2) are connected in a delta connection, and at least one first and fourth switching device (e.g. 8.2, 36.1), two second switching devices (e.g. 32.1 and 35.1) and one fifth switching device (e.g. 38.2) are assigned to each changeover station (22.1, 22.2) for purposes of the connection of two phases (e.g. R and S).

11. The magnetic levitation rail system in accordance with one of the Claims 1 to 10, **characterised in that** it has circuitry dedicated to the purpose of maintaining voltage or current with a store (42) for purposes of storage of a required voltage or current value, and a sequence controller (41), such that during switching processes, instead of a required value prescribed by means of active regulation, a constant, controlled voltage is supplied to the associated substation (e.g. 10A), which ensures the desired flow of current after the switching process has taken place.

## Revendications

1. Train à suspension magnétique comprenant un véhicule à suspension magnétique (5), une voie de circulation (2), un moteur linéaire à stator déployé synchrone, qui présente au moins un enroulement de stator déployé posé dans la direction de la voie de circulation (2) avec une pluralité de portions d'enroulement (3.1-3.9, 15.1-15.9) séparées électriquement les unes des autres par des points de changement (22, 23) se suivant directement, au moins un câble de voie (par ex. 9) conçu pour alimenter électriquement les portions d'enroulement, étendu dans la direction (x) de la voie de roulement (2), au moins une sous-station (par ex. 10A,10B) reliée au câble de voie (9) et des premiers dispositifs de connexion (8, 16) pour le branchement à la suite les uns des autres des portions d'enroulement(3.1-3.9, 15.1-15.9) au câble de voie (9) de manière correspondante au mouvement d'avance du véhicule (5), **caractérisé par** des deuxièmes dispositifs de connexion (32, 35), au moyen desquels pendant le passage sur un point de changement (22, 23) par le véhicule à suspension magnétique (par ex. 3.3), respectivement une première portion d'enroulement (par ex. 3.2) et une deuxième portion d'enroulement (par ex. 3.3), qui est séparée par le point de changement (22, 23) de la première portion d'enroulement (par ex.3.2) et est disposée en suivant directement celle-ci dans la direction de conduite (x), sont reliées électriquement l'une à l'autre dans une connexion en série.

2. Train à suspension magnétique selon la revendication 1, **caractérisé en ce que** la connexion en série est branchée en série avant, pendant ou après le passage du point de changement (22.2) à une troisième portion d'enroulement (par ex. 3.4) située directement avant celle-ci dans la direction de conduite (x).

3. Train à suspension magnétique selon la revendication 2, **caractérisé en ce que** la première portion d'enroulement (3.2) est séparée électriquement de la connexion en série après le passage du point de changement (22.2) et la deuxième portion d'enroulement (3.3) est branchée directement au câble de voie (9).

4. Train à suspension magnétique selon une des revendications 1 à 3, **caractérisé en ce que** en présence de deux portions de stator déployé disposées côte à côte, des portions d'enroulement respectivement situées côte à côte et coordonnées par paires (par ex. 3.1, 15.1 ou 3.2, 15.2) sont incluses dans la connexion en série par un branchement en série ou parallèle.

5. Train à suspension magnétique selon une des revendications 1 à 4, **caractérisé en ce que** les portions d'enroulement sont rassemblées et mises en fonctionnement à la manière d'une connexion en triangle ou d'une connexion à point neutre en courant triphasé.

6. Train à suspension magnétique selon une des revendications 1 à 5, **caractérisé par** des troisièmes dispositifs de connexion (33, 37), par l'intermédiaire desquels les portions d'enroulement (par ex. 3.1-3.4) peuvent être reliées individuellement avec respectivement un point neutre (par ex. 15.1-15.4).

7. Train à suspension magnétique selon une des revendications 1 à 6, **caractérisé en ce que** le stator déployé présente deux portions situées côte à côte avec des portions d'enroulement (par ex. 3.1, 15.1 ou 3.2, 15.2) respectivement situées côte à côté, pouvant être reliées les unes aux autres par des quatrièmes dispositifs de connexion (36).

8. Train à suspension magnétique selon une des revendications 1 à 7, **caractérisé en ce que** les portions d'enroulement (3.1-3.9, 15.1-15.9) sont conçues en connexion en étoile entre deux points de changement respectif (22, 23) et au moins un premier, deuxième et troisième dispositif de connexion (8, 16 ; 32, 35 ; 33, 37) sont coordonnés à chaque point de changement (22, 23).

9. Train à suspension magnétique selon la revendication 8, **caractérisé en ce que** entre deux points de changement respectifs (22, 23) au moins deux portions d'enroulement respectives (par ex. 3.2, 15.2) sont disposées et au moins respectivement un premier dispositif de connexion (par ex. 8.2), deux deuxièmes dispositifs de connexion (par ex. 32.1, 35.1), un troisième dispositif de connexion (par ex. 37.2) et un quatrième dispositif de connexion (36.1) sont coordonnés à chaque point de changement (22, 23).

10. Train à suspension magnétique selon une des revendications 1 à 7, **caractérisé en ce que** les portions d'enroulement (par ex. 3.11, 3.21, 3.31) sont branchées en connexion en triangle et au moins respectivement un premier et un quatrième dispositif de connexion (par ex. 8.2, 36.1), deux deuxièmes dispositifs de connexion (par ex. 32.1 et 35.1) et un cinquième circuit de connexion (par ex. 38.2) pour relier deux phases (par ex. R et S) sont coordonnés à chaque point de changement (22.1, 22.2).

11. Train à suspension magnétique selon une des revendications 1 à 10, **caractérisé en ce qu'**il présente un dispositif de connexion conçu pour conserver la tension ou le courant avec une mémoire (42) conçue afin de mémoriser une valeur de consigne de tension ou de courant et un séquenceur (41), de telle sorte que pendant les processus de commutation au lieu d'une valeur de consigne prescrite par une régulation active une tension constante, commandée est alimentée en continu dans la sous-station afférente (par ex. 10A), qui garantit la circulation de courant souhaitée après un processus de commutation réussi.
